# EUROPEAN PATENT SPECIFICATION

(11) **EP 4 242 812 B1**
(45) Date of publication and mention of the grant of the patent: **14.10.2026**
(21) Application number: 21920688.5
(22) Date of filing: 08.11.2021
(51) Int. Cl.: G06F 3/04817, G06F 3/0482, G06F 3/0486, G06F 3/04883, G06F 3/04886

(54) **PICTURE SAVING METHOD, ELECTRONIC DEVICE, AND STORAGE MEDIUM**
BILDSPARVERFAHREN, ELEKTRONISCHE VORRICHTUNG UND SPEICHERMEDIUM
PROCÉDÉ D'ENREGISTREMENT D'IMAGES, DISPOSITIF ÉLECTRONIQUE ET SUPPORT DE STOCKAGE

(30) Priority: 22.01.2021 CN 202110085555
(43) Date of publication of application: 13.09.2023
(73) Proprietor: Gree Electric Appliances, Inc. of Zhuhai, Zhuhai, Guangdong 519070 (CN)
(72) Inventor: XIANG, Guangyong, Zhuhai, Guangdong 519070 (CN)
(74) Representative: Zacco GmbH
(86) International application number: PCT/CN2021/129303
(87) International publication number: WO 2022/156312

(56) References cited:
- EP-A1- 3 674 868
- EP-A1- 3 916 532
- WO-A1-2020/151512
- CN-A- 105 160 017
- CN-A- 106 814 954
- CN-A- 110 175 252
- CN-A- 112 732 142
- US-B1- 9 832 368

## Description

### Cross-Reference to Related Application

The present disclosure is based upon and claims priority to Chinese patent application No.20211008555.0 filed to the China National Intellectual Property Administration on January 22, 2021 and entitled "Picture Saving Method, Electronic Device and Storage Medium".

### Technical Field

The present disclosure relates to the field of internet technologies, in particular to a picture saving method, an electronic device and a storage medium.

### Background

With the continuous progress of the present age, electronic devices such as mobile phones and tablet computers already become the electronic devices commonly used by people, and viewing pictures in the electronic devices is also one of functions commonly used by people.

Existing modes for saving the pictures are achieved, for example, by long-pressing the bottom of a picture to pop up a new window, and then clicking a download button. The drawback of this method is that: firstly, the saving process requires a two-step operation, which is too cumbersome. Secondly, this saving mode may briefly display a text floating window at the end of saving, and the picture saving location may not be selected, a default group may be formed, and the saved pictures may also not be browsed in real time, and may only be viewed in a mobile phone picture library. At the same time, the existing picture saving methods may not save the pictures in batches from different software to a certain group, and the different software needs to be opened separately for operations.

Patent application WO2020151512A discloses a user taking a screenshot, generating a thumbnail of said screenshot, displaying albums, allowing a user to drag and drop said thumbnail into an album, and saving the screenshot in a desired album.

Patent application EP3674868A1 discloses the use of floating windows for displaying pictures.

Therefore, it is necessary to conduct research and development in response to the problems existing in the above related technologies, as to provide a picture saving method that may preview groupings conveniently and achieve batch-saving.

### Summary

A main purpose of the present disclosure is to provide a picture saving method, an electronic device and a storage medium, as to solve problems in related technologies that steps of saving pictures are cumbersome, and it may not be directly grouped, so that a user may view the number of the pictures and browse the content of the saved pictures in real time while the pictures are saved, and may quickly save the pictures to a custom album group.

In a first aspect, the present disclosure provides a picture saving method, and the picture saving method includes the following steps:
in an acquisition step, in response to a picture saving instruction of a user, pictures to be saved are acquired to a preset icon.
in a first display step, the preset icon is displayed on a screen.
in a second display step, in response to a first instruction of the user operating the preset icon, display of an album window is triggered.
in a saving step, in response to a second instruction of the user operating the preset icon, at least one of the pictures to be saved is saved to a designated album displayed in the album window.

In some implementation modes, the above picture saving method further includes: the second instruction includes an instruction for the user to long-press the preset icon and an instruction for the user to drag the preset icon to the designated album.

The saving step includes the following steps:
in response to the instruction for the user to long-press the preset icon, the preset icon is enabled to be in a draggable state.
in response to the instruction for the user to drag the preset icon to the designated album, all the pictures to be saved are saved to the designated album.

In some implementation modes, the above picture saving method further includes: the second instruction includes an instruction for the user to single click the preset icon, an instruction for the user to long-press the a designated picture and an instruction for the user to drag the designated picture.

The saving step includes the following steps:
in response to the instruction for the user to single click the preset icon, the preset icon is expanded into a floating window, and all the pictures to be saved are displayed in the floating window.
in response to the instruction for the user to long-press the designated picture, the designated picture is enabled to be in the draggable state.
in response to the instruction for the user to drag the designated picture, the designated picture is saved to the designated album corresponding to the designated picture.

In some implementation modes, the above picture saving method further includes the following steps: thumbnails of all the pictures to be saved are displayed in the floating window.

In some implementation modes, the above picture saving method further includes: the saving step further includes the following step.

In response to an instruction for the user to edit a picture, the pictures to be saved are edited.

In some implementation modes, the above picture saving method further includes: the first display step further includes the following step: the number of the pictures to be saved is displayed on the preset icon.

In some implementation modes, the above picture saving method further includes the following step: in a moving step, in response to an instruction for the user to long-press the preset icon, the preset icon is enabled to be in a draggable state, and in response to an instruction for the user to drag the preset icon, the preset icon is moved.

In some implementation modes, the above picture saving method further includes: the first instruction is that the preset icon is moved to the edge of the screen.

In a second aspect, the present disclosure provides an electronic device, including a memory and a processor, herein the memory is configured to store one or more computer instructions, herein the picture saving method described in any one of items in the first aspect is achieved while the one or more computer instructions are executed by the processor.

In a third aspect, the present disclosure provides a computer-readable storage medium, in which a program is stored, herein the picture saving method described in any one of the items in the first aspect is achieved while the program is executed by a computer.

Compared with the related technologies, one or more embodiments in the above schemes may have the following advantages or beneficial effects.

By saving the pictures to be saved to the preset icon, and saving the pictures to be saved to the designated album by the preset icon, the present disclosure allows the user to view the number of the pictures and browse the contents of the saved pictures in real time while the pictures are saved, and quickly save the pictures to the custom album group.

### Brief Description of the Drawings

Drawings of the description for constituting a part of the present disclosure are used to provide further understanding of the present disclosure. Schematic embodiments of the present disclosure and descriptions thereof are used to explain the present disclosure, and do not constitute improper limitation to the present disclosure. In the drawings:
Fig. 1 is a flowchart of a picture saving method according to an exemplary implementation mode of the present disclosure.
Fig. 2 is a flowchart of a picture saving method according to a specific implementation mode in Embodiment I of the present disclosure.
Fig. 3 is a flowchart of a picture saving method according to a specific implementation mode in Embodiment II of the present disclosure.
Fig. 4 is a schematic diagram of a preset icon displayed in response to an instruction for a user to save a picture in the present disclosure.
Fig. 5 is a schematic diagram of displaying an album window triggered in response to an instruction for the user to drag the preset icon to the edge of a screen in the present disclosure.
Fig. 6 is a schematic diagram in response to an instruction for the user to drag the preset icon to a designated album in the present disclosure.
Fig. 7 is a schematic diagram in response to an instruction for the user to drag the preset icon in the present disclosure.
Fig. 8 is a schematic diagram of thumbnails of pictures to be saved displayed in response to an instruction for the user to single click the preset icon in the present disclosure.
Fig. 9 is a schematic diagram of displaying the album window triggered in response to an instruction for the user to drag the designated picture to the edge of the screen in the present disclosure.
Fig.10 is a schematic diagram in response to an instruction for the user to drag the designated picture to the designated album in the present disclosure.

### Detailed Description of the Embodiments

Implementation modes of the present disclosure are described in detail below in combination with drawings and embodiments, in order to fully understand and implement the implementation process of how to apply technical means to solve technical problems and achieve corresponding technical effects in the present disclosure. The embodiments of the present disclosure and respective features in the embodiments may be combined with each other without conflicting, and technical schemes formed are all within a scope of protection of the present disclosure.

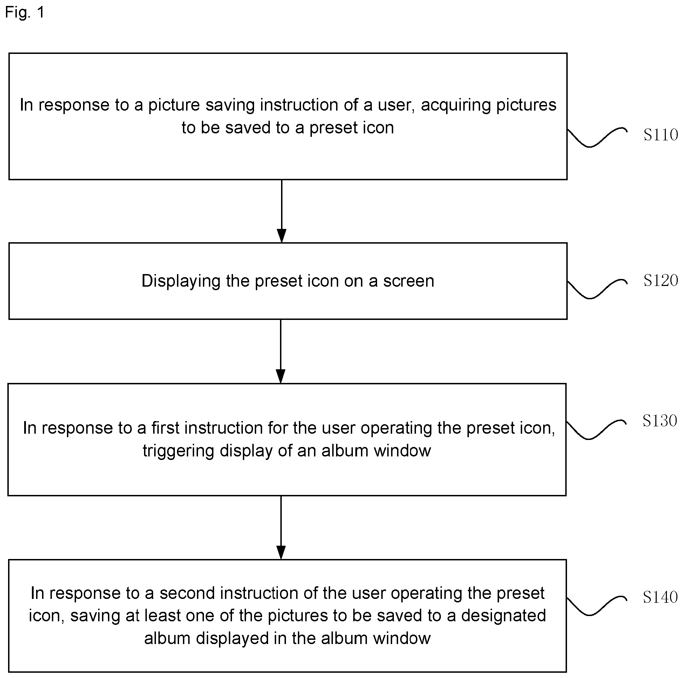

As shown in Fig. 1, an implementation mode of the present disclosure provides a picture saving method, and the picture saving method includes the following steps S110 to S140.

In the step S110, in response to a picture saving instruction of a user, pictures to be saved are acquired to a preset icon.

For example, while a picture is browsed in mobile phone application software, a picture saving button is clicked. Thus, in response to the picture saving instruction of the user, picture information to be saved is saved to one preset icon for subsequent processing.

In the step S120, the preset icon is displayed on a screen.

For example, after the user clicks the picture saving button, the preset icon is displayed on the mobile phone screen for subsequent operations.

In the step S130, in response to a first instruction for the user operating the preset icon, display of an album window is triggered.

For example, firstly, the user long-presses the preset icon so that it is in the draggable state, then drags the preset icon to the edge of the screen in response to the operation instruction for the user to drag the preset icon to the edge of the screen, and display of an album window is triggered. Specifically, while the preset icon is in the draggable state, the preset icon is displayed as a jitter state.

In the step S140, in response to a second instruction of the user operating the preset icon, at least one of the pictures to be saved is saved to a designated album displayed in the album window.

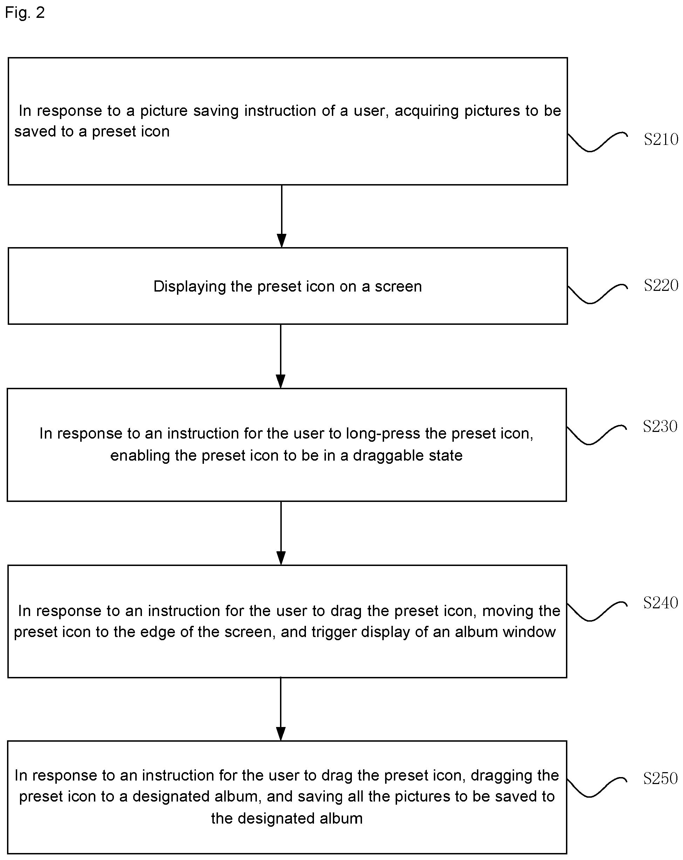

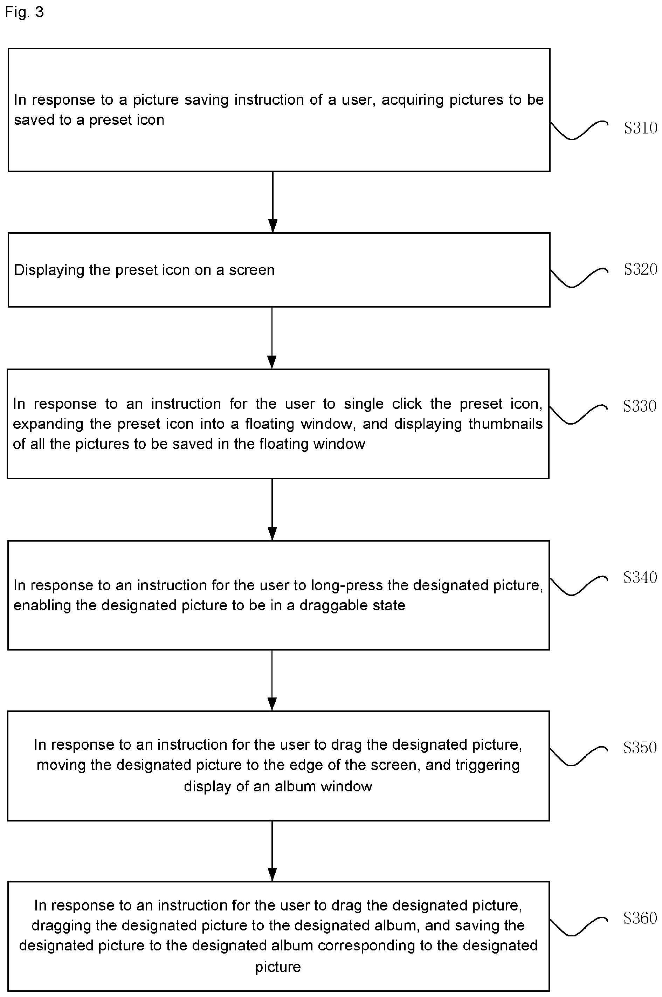

For example, the user drags the preset icon to the designated album, in response to the operation instruction for the user to drag the preset icon, all the pictures to be saved in the preset icon are saved to the designated album. Alternatively, it is set to click the preset icon to display thumbnails of the pictures to be saved, the thumbnail of the designated picture is dragged to the designated album, in response to the operation instruction for the user to drag the designated picture, and the designated picture is saved to the designated album. The above two situations may be elaborated in detail in the following text with reference to Fig. 2 and Fig. 3, respectively.

### Embodiment I

As shown in Fig. 2, an implementation mode of the present disclosure provides a picture saving method, and the picture saving method includes the following steps S210 to S250.

In the step S210, in response to a picture saving instruction of a user, pictures to be saved are acquired to a preset icon.

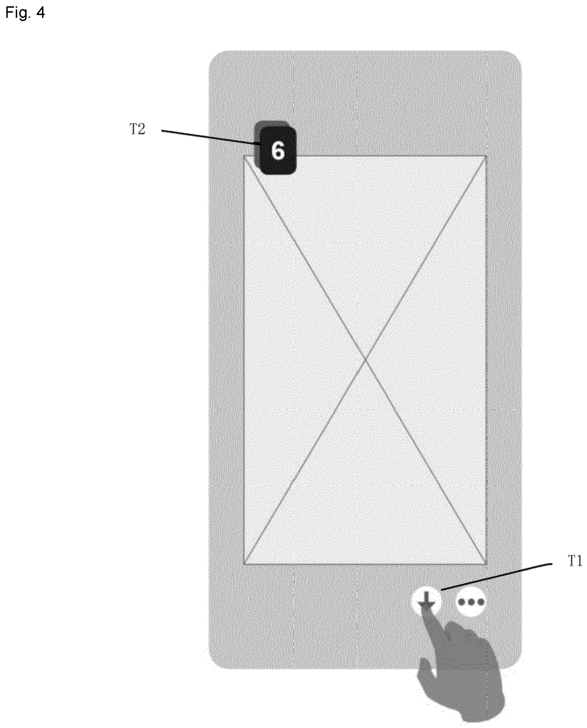

As shown in Fig. 4, while the picture is browsed in mobile phone application software, a picture saving button T1 is clicked, and in response to the picture saving instruction of the user, information of the picture to be saved is saved to one preset icon T2 for subsequent processing.

In the step S220, the preset icon is displayed on a screen.

As shown in Fig. 4, after the user clicks the picture saving button T1, the preset icon T2 is displayed on the mobile phone screen, and the preset icon T2 may be located at any positions on the screen for subsequent operations.

Specifically, the number of the pictures to be saved is displayed on the preset icon T2, so that the user may know how many pictures to be saved are there at present, and it is convenient for the subsequent operations.

In the step S230, in response to an instruction for the user to long-press the preset icon, the preset icon is enabled to be in a draggable state.

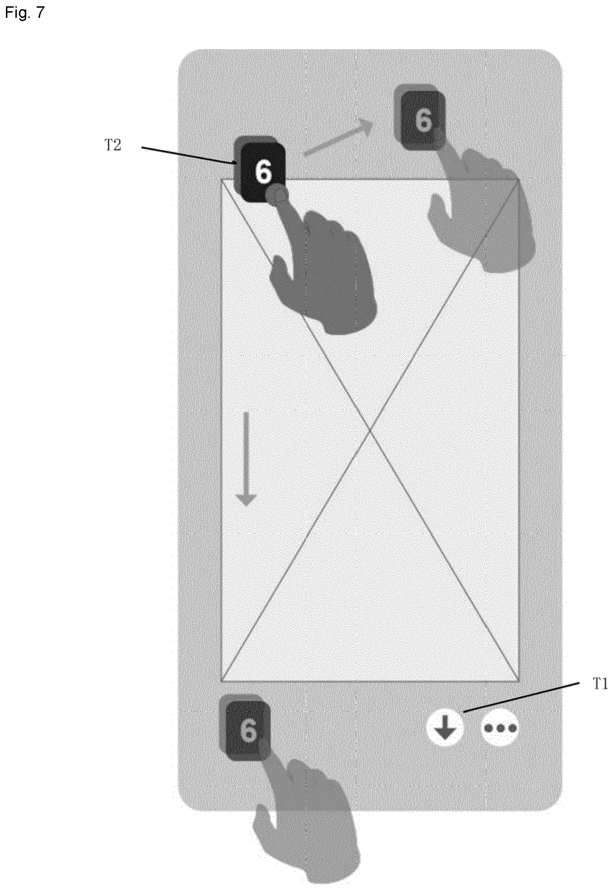

As shown in Fig. 7, the user long-presses the preset icon T2 on the mobile phone screen, and in response to the instruction for the user to long-press the preset icon T2, the preset icon T2 is enabled to be in the draggable state for the subsequent operations.

Specifically, in response to the instruction for the user to long-press the preset icon T2, the preset icon T2 is enabled to be in the draggable state, and in response to an instruction for the user to drag the preset icon T2, the preset icon T2 is moved. Specifically, while the preset icon T2 is in the draggable state, the preset icon T2 is displayed as a jitter state.

For example, while application software is used by the user, the position of the preset icon T2 hinders the user to use the mobile phone. Therefore, the user moves the preset icon T2 and adjusts the position of the preset icon T2, so that it no longer hinders the user by the user.

In the step S240, in response to an instruction for the user to drag the preset icon, the preset icon is moved to the edge of the screen, and display of an album window is triggered.

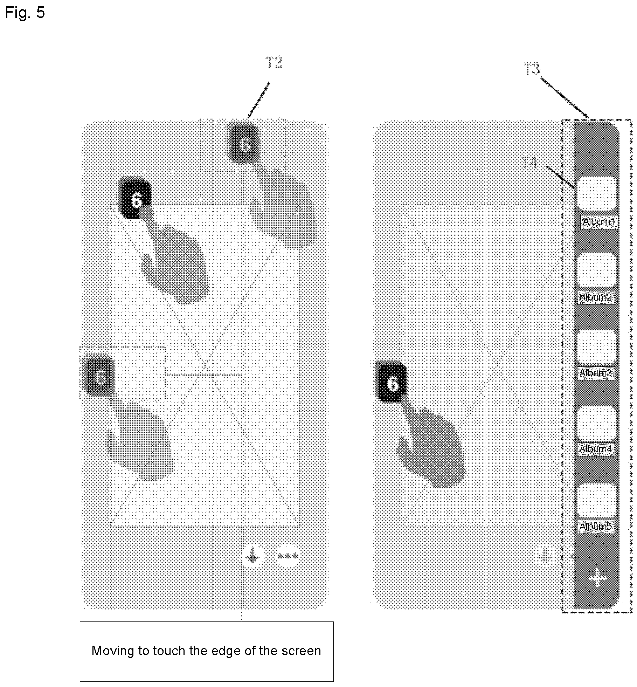

As shown in Fig. 5, in response to the instruction for the user to drag the preset icon T2 in the draggable state to the edge of the screen, the album window T3 is triggered to display on the screen. The album window T3 contains the designated album T4, and it is used to drag the preset icon to the designated album T4 in the future, thus an operation of saving the picture is completed. It should be noted that the above screen edge is not limited to specific positions, and the upper, lower, left, and right edges of the screen are all acceptable. The album window T3 and the middle layer of the picture may have masking, and the layers are distinguished, so the operation interface is simple and clean, and the reading burden of the user is reduced.

In the step S250, in response to an instruction for the user to drag the preset icon, the preset icon is dragged to the designated album, and all the pictures to be saved are saved to the designated album.

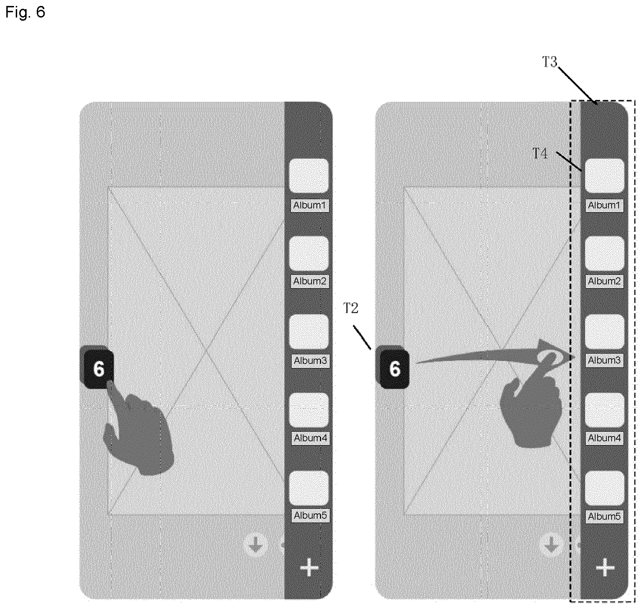

As shown in Fig. 6, in response to the instruction for the user to drag the preset icon T2 in the draggable state to the designated album T4 in the album window T3, and all the pictures to be saved in the preset icon T2 are saved to the designated album T4.

The user may cache the information of the picture to be saved in the preset icon by clicking the saving button, and then drag the preset icon to the designated so that all the pictures cached in the preset icon may be saved to the designated album by the user, the situation that the pictures may only be saved separately and may not be saved in batches is improved, so the operation of saving the pictures is easier for the user.

### Embodiment II

As shown in Fig. 3, an implementation mode of the present disclosure provides a picture saving method, and the picture saving method includes the following steps S310 to S360.

In the step S310, in response to a picture saving instruction of a user, pictures to be saved are acquired to a preset icon.

As shown in Fig. 4, while the picture is browsed in mobile phone application software, a picture saving button T1 is clicked, and in response to the picture saving instruction of the user, information of the picture to be saved is saved to a preset icon T2 for subsequent processing.

In the step S320, the preset icon is displayed on a screen.

As shown in Fig. 4, after the user clicks the picture saving button T1, the preset icon T2 is displayed on the mobile phone screen, and the preset icon T2 may be located at any positions on the screen for subsequent operations.

In the step S330, in response to an instruction for the user to single click the preset icon, the preset icon is expanded into a floating window, and thumbnails of all the pictures to be saved are displayed in the floating window.

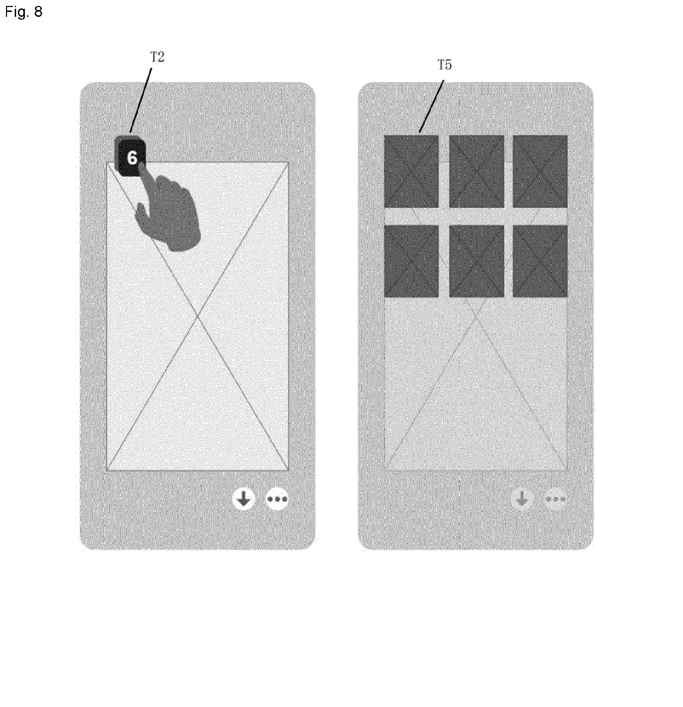

As shown in Fig. 8, in response to the instruction for the user to single click the preset icon T2 on the screen, the preset icon T2 is expanded into the floating window, and the thumbnails T5 of all the pictures to be saved are displayed in the floating window. Therefore, the user may simultaneously view the thumbnails T5 of all the pictures to be saved, so that the user may select and operate on a certain designated picture in the future. The floating window may be intelligently located at the top left of the picture according to the picture height, the picture is avoided from being blocked, and the floating window automatically disappears without a saving operation for a certain period of time. The floating window may display the number of the pictures saved within a certain period of time, the floating window is clicked, and black masking may appear above the picture to distinguish layers; and the floating window is expanded to present a thumbnail of the saved picture. The floating window may also be long-pressed to customize and adjust its position after vibration.

Specifically, in response to an instruction for the user to edit the pictures, the pictures to be saved are edited.

For example, a designated picture is selected in the floating window, and in response to the instruction for the user to edit the designated picture T5, the designated picture T5 to be saved is edited. After being edited, the edited picture may be saved to the designated album.

In the step S340, in response to an instruction for the user to long-press the designated picture, the designated picture is enabled to be in a draggable state.

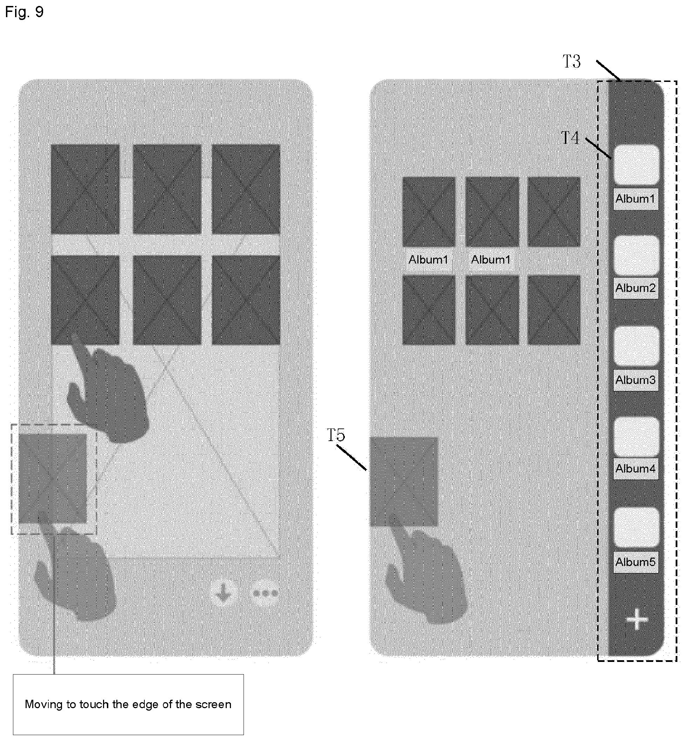

As shown in Fig. 9, the user long-presses the designated picture T5 on the mobile phone screen, and in response to the instruction for the user to long-press the designated picture T5, the designated picture T5 is enabled to be in the draggable state, so that it is dragged to the designated album T4 subsequently.

In the step S350, in response to an instruction for the user to drag the designated picture, the designated picture is moved to the edge of the screen, and display of an album window is triggered.

As shown in Fig. 9, in response to the instruction for the user to drag the designated picture T5 in the draggable state to the edge of the screen, the album window T3 is triggered to display on the screen. The album window T3 contains the designated album T4, and it is used to drag the designated picture to the designated album T4 in the future, thus an operation of saving the picture is completed. It should be noted that the above screen edge is not limited to specific positions, and the upper, lower, left, and right edges of the screen are all acceptable. The album window T3 and the middle layer of the picture may have masking, and the layers are distinguished, so the operation interface is simple and clean, and the reading burden of the user is reduced.

In the step S360, in response to an instruction for the user to drag the designated picture, the designated picture is dragged to the designated album, and the designated picture is saved to the designated album corresponding to the designated picture.

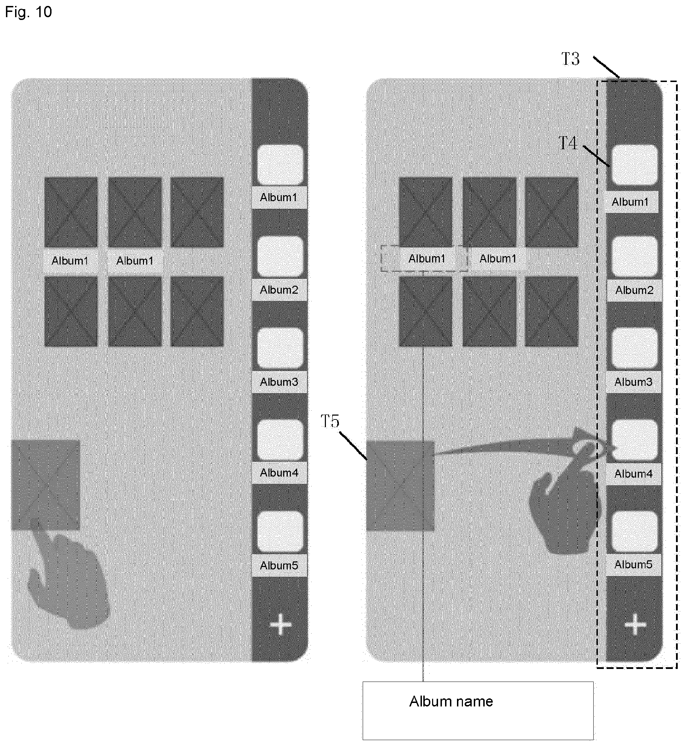

As shown in Fig. 10, in response to the instruction for the user to drag the designated picture T5, the designated picture T5 is dragged to the designated album T4, and the designated picture T5 is saved to the designated album T4 corresponding to the designated picture T5, thereby the operation of saving a single picture is completed.

The user may single click the preset icon to display the floating window, the thumbnail of the picture to be saved is displayed in the floating window, then, the designated picture is dragged to the designated album so that the user may select and save the designated picture to the designated album, the situation that the picture may only be saved to a default album by default is improved, so the operation of saving the pictures is easier for the user.

### Embodiment III

An implementation mode of the present disclosure provides an electronic device, the electronic device may be a mobile phone, a tablet computer or the like, including a memory and a processor. The memory is set to store one or more computer instructions, herein the picture saving method in the above embodiments is achieved while the one or more computer instructions are executed by the processor.

Herein, the processor is set to execute all or part of the steps in the picture saving method according to Embodiment I or Embodiment II. The memory is set to store various types of data, such as picture information parameters.

The processor may be an Application specific Integrated Circuit (ASIC for short), a Digital Signal Processor (DSP for short), a Digital Signal Processing Device (DSPD for short), a Programmable Logic Device (PLD for short), a Field Programmable Gate Array (FPGA for short), a controller, a microcontroller, a microprocessor or other electronic elements, and it is set to execute the picture saving method in Embodiment I above.

The memory may be achieved by any types of volatile or non-volatile storage devices, or a combination of them, such as a Static Random Access Memory (SRAM for short), an Electrically Erasable Programmable Read-Only Memory (EEPROM for short), an Erasable Programmable Read-Only Memory (EPROM for short), a Programmable Read-Only Memory (PROM for short), a Read-Only Memory (ROM for short), a magnetic memory, a flash memory, a magnetic disk or an optical disk.

Each functional unit in each embodiment of the present disclosure may be integrated in one processing unit, or each unit may exist physically independently, or two or more units may be integrated in one unit. If the function is implemented in the form of a software functional unit and sold or used as an independent product, it may be stored in a computer-readable storage medium. Based on this understanding, a technical scheme of the present disclosure, in essence or a part that contributes to related technologies or a part of this technical scheme, may be reflected in the form of a software product, and this computer software product is stored in a storage medium, including a plurality of instructions used to enable a computer device (it may be a personal computer, a server, a network device or the like) to perform all or part of the steps of the method in each embodiment of the present disclosure. The aforementioned storage medium includes: a USB flash disk, a mobile hard disk drive, a Read-Only Memory (ROM), a Random Access Memory (RAM), a magnetic disk or optical disk, and other media that may store program verification codes.

It should be noted that terms used here are only for the purpose of describing the specific implementation modes, and are not intended to limit the exemplary implementation modes according to the present disclosure. While terms "having" and/or "including" are used in this description, it is indicated that there are features, steps, operations, devices, components, and/or combinations thereof.

The above are only the specific implementation modes of the present disclosure, but the scope of protection of the present disclosure is not limited thereto. Within the scope of the technology disclosed by the present disclosure, those of ordinary skill in the art may easily think of changes or replacements that shall fall within the scope of protection of the present disclosure. Therefore, the scope of protection of the present disclosure should be based on the scope of protection of the claims. The above are only preferred embodiments of the present disclosure, and are not intended to limit the present disclosure.

It should be noted that terms "first", "second" and the like in the description, claims, and drawings of the present disclosure are used to distinguish similar objects, rather than to describe a specific sequence or precedence order. It should be understood that the terms used in this way may be interchanged in appropriate cases, so that the implementation modes of the present disclosure described herein may be implemented, for example, in a sequence other than those illustrated or described here.

It should be understood that the exemplary implementation modes in this description may be implemented in the different forms, and should not be construed to be limited to the implementation modes described here. These implementation modes are provided in order to make the present disclosure thorough and complete, and to fully convey the ideas of these exemplary implementation modes to those of ordinary skill in the art, and it should not be understood as limitation to the present disclosure.

## Claims

1. A picture saving method, comprising:
an acquisition step, in response to a picture saving instruction of a user, acquiring pictures to be saved to a preset icon (T2);
a first display step, displaying the preset icon (T2) on a screen;
a second display step, in response to a first instruction of the user operating the preset icon (T2), triggering display of an album window (T3); and
a saving step, in response to a second instruction of the user operating the preset icon (T2), saving at least one of the pictures to be saved to a designated album (T4) displayed in the album window (T3);
wherein the second instruction comprises an instruction for the user to single click the preset icon (T2), an instruction for the user to long-press a designated picture and an instruction for the user to drag the designated picture,
wherein the saving step comprises, in response to a user single-clicking the preset icon (T2), expanding the preset icon into a floating window and displaying all the pictures to be saved in the floating window; and
in response to the user long-pressing a designated picture, enabling the designated picture to be in the draggable state; and
in response to the user dragging the designated picture to the designated album (T4), saving the designated picture to the designated album (T4) corresponding to the designated picture.

2. The picture saving method according to claim 1, wherein thumbnails (T5) of all the pictures to be saved are displayed in the floating window.

3. The picture saving method according to claim 2, wherein the saving step further comprises:
in response to an instruction for the user to edit a picture, editing the pictures to be saved.

4. The picture saving method according to claim 1, wherein the first display step further comprises the following steps: displaying the number of the pictures to be saved on the preset icon (T2).

5. The picture saving method according to claim 1, further comprising:
a moving step, in response to an instruction for the user to long-press the preset icon (T2), enabling the preset icon (T2) to be in a draggable state, and in response to an instruction for the user to drag the preset icon (T2), moving the preset icon (T2).

6. The picture saving method according to claim 5, wherein the first instruction is that the preset icon (T2) is moved to the edge of the screen.

7. An electronic device, comprising a memory and a processor, wherein the memory is configured to store one or more computer instructions, wherein the picture saving method according to any one of claims 1 to 6 is achieved while the one or more computer instructions are executed by the processor.

8. A computer-readable storage medium, wherein a program is stored, and the picture saving method according to any one of claims 1 to 6 is achieved while the program is executed by a computer.

## Patentansprüche

1. Bildspeicherverfahren, umfassend:
einen Erfassungsschritt, in dem als Reaktion auf eine Bildspeicheranweisung eines Benutzers zu speichernde Bilder in einem voreingestellten Symbol (T2) erfasst werden;
einen ersten Anzeigeschritt, in dem das voreingestellte Symbol (T2) auf einem Bildschirm angezeigt wird;
einen zweiten Anzeigeschritt, in dem als Reaktion auf eine erste Anweisung des Benutzers, der das voreingestellte Symbol (T2) bedient, die Anzeige eines Albumfensters (T3) ausgelöst wird; und
einen Speicherschritt, in dem als Reaktion auf eine zweite Anweisung des Benutzers, der das voreingestellte Symbol (T2) bedient, mindestens eines der zu speichernden Bilder in ein bestimmtes Album (T4) gespeichert wird, das im Albumfenster (T3) angezeigt wird;
wobei die zweite Anweisung eine Anweisung für den Benutzer zum einmaligen Klicken auf das voreingestellte Symbol (T2), eine Anweisung für den Benutzer zum langen Drücken eines bestimmten Bildes und eine Anweisung für den Benutzer zum Ziehen des bestimmten Bildes umfasst,
wobei der Speicherschritt als Reaktion auf ein einmaliges Klicken des Benutzers auf das voreingestellte Symbol (T2) das Erweitern des voreingestellten Symbols in ein schwebendes Fenster und das Anzeigen aller zu speichernden Bilder im schwebenden Fenster umfasst; und
als Reaktion auf das lange Drücken eines bestimmten Bildes durch den Benutzer
Versetzen des bestimmten Bildes in den ziehbaren Zustand; und als Reaktion auf das Ziehen des bestimmten Bildes durch den Benutzer in das bestimmte Album (T4) Speichern des bestimmten Bildes in das bestimmte Album (T4), das dem bestimmten Bild entspricht.

2. Bildspeicherverfahren nach Anspruch 1, wobei Miniaturansichten (T5) aller zu speichernden Bilder im schwebenden Fenster angezeigt werden.

3. Bildspeicherverfahren nach Anspruch 2, wobei der Speicherschritt ferner umfasst:
als Reaktion auf eine Anweisung für den Benutzer zum Bearbeiten eines Bildes Bearbeiten der zu speichernden Bilder.

4. Bildspeicherverfahren nach Anspruch 1,
wobei der erste Anzeigeschritt ferner die folgenden Schritte umfasst: Anzeigen der Anzahl der zu speichernden Bilder auf dem voreingestellten Symbol (T2).

5. Bildspeicherverfahren nach Anspruch 1, ferner umfassend:
einen Verschiebeschritt, in dem als Reaktion auf eine Anweisung für den Benutzer zum langen Drücken des voreingestellten Symbols (T2) das voreingestellte Symbol (T2) in einen ziehbaren Zustand versetzt wird und als Reaktion auf eine Anweisung für den Benutzer zum Ziehen des voreingestellten Symbols (T2) das voreingestellte Symbol (T2) verschoben wird.

6. Bildspeicherverfahren nach Anspruch 5,
wobei die erste Anweisung darin besteht, dass das voreingestellte Symbol (T2) an den Rand des Bildschirms verschoben wird.

7. Elektronische Vorrichtung, umfassend einen Arbeitsspeicher und einen Prozessor, wobei der Arbeitsspeicher dazu ausgelegt ist, eine oder mehrere Computeranweisungen zu speichern, wobei das Bildspeicherverfahren nach einem der Ansprüche 1 bis 6 ausgeführt wird, während die eine oder mehreren Computeranweisungen durch den Prozessor ausgeführt werden.

8. Computerlesbares Speichermedium, auf dem ein Programm gespeichert ist, und wobei das Bildspeicherverfahren nach einem der Ansprüche 1 bis 6 ausgeführt wird, während das Programm durch einen Computer ausgeführt wird.

## Revendications

1. Procédé d'enregistrement d'images, comprenant :
une étape d'acquisition consistant à, en réponse à une instruction d'enregistrement d'image d'un utilisateur, acquérir des images devant être enregistrées sur une icône prédéfinie (T2) ;
une première étape d'affichage consistant à afficher l'icône prédéfinie (T2) sur un écran ;
une seconde étape d'affichage consistant à, en réponse à une première instruction de l'utilisateur agissant sur l'icône prédéfinie (T2), déclencher l'affichage d'une fenêtre d'album (T3) ; et
une étape d'enregistrement consistant à, en réponse à une seconde instruction de l'utilisateur agissant sur l'icône prédéfinie (T2), enregistrer au moins une des images devant être enregistrées dans un album désigné (T4) affiché dans la fenêtre d'album (T3) ;
dans lequel la seconde instruction comprend une instruction invitant l'utilisateur à effectuer un simple clic sur l'icône prédéfinie (T2), une instruction invitant l'utilisateur à effectuer un appui long sur une image désignée et une instruction invitant l'utilisateur à faire glisser l'image désignée,
dans lequel l'étape d'enregistrement comprend, en réponse au fait qu'un utilisateur effectue un simple clic sur l'icône prédéfinie (T2), l'expansion de l'icône prédéfinie en une fenêtre flottante et l'affichage de toutes les images devant être enregistrées dans la fenêtre flottante ; et
en réponse au fait que l'utilisateur effectue un appui long sur une image désignée,
le passage de l'image désignée dans un état déplaçable par glissement ; et
en réponse au fait que l'utilisateur fait glisser l'image désignée vers l'album désigné (T4), l'enregistrement de l'image désignée dans l'album désigné (T4) correspondant à l'image désignée.

2. Procédé d'enregistrement d'images selon la revendication 1, dans lequel des miniatures (T5) de toutes les images devant être enregistrées sont affichées dans la fenêtre flottante.

3. Procédé d'enregistrement d'images selon la revendication 2, dans lequel l'étape d'enregistrement comprend en outre :
en réponse à une instruction invitant l'utilisateur à modifier une image, la modification des images devant être enregistrées.

4. Procédé d'enregistrement d'images selon la revendication 1, dans lequel la première étape d'affichage comprend en outre l'étape consistant à : afficher le nombre d'images devant être enregistrées sur l'icône prédéfinie (T2).

5. Procédé d'enregistrement d'images selon la revendication 1, comprenant en outre :
une étape de déplacement consistant à, en réponse à une instruction invitant l'utilisateur à effectuer un appui long sur l'icône prédéfinie (T2), faire passer l'icône prédéfinie (T2) dans un état déplaçable par glissement, et en réponse à une instruction invitant l'utilisateur à faire glisser l'icône prédéfinie (T2), déplacer l'icône prédéfinie (T2).

6. Procédé d'enregistrement d'images selon la revendication 5, dans lequel la première instruction consiste à déplacer l'icône prédéfinie (T2) vers le bord de l'écran.

7. Dispositif électronique, comprenant une mémoire et un processeur, dans lequel la mémoire est configurée pour stocker au moins une instruction informatique, dans lequel le procédé d'enregistrement d'images selon l'une quelconque des revendications 1 à 6 est mis en œuvre lors de l'exécution de ladite au moins une instruction informatique par le processeur.

8. Support de stockage lisible par ordinateur, dans lequel un programme est stocké, et le procédé d'enregistrement d'images selon l'une quelconque des revendications 1 à 6 est mis en œuvre lors de l'exécution du programme par un ordinateur.
